# DEMANDE DE BREVET EUROPEEN

(11) **EP 1 164 782 A1**
(43) Date de publication de la demande: **19.12.2001**
(21) Numéro de dépôt: 01401555.6
(22) Date de dépôt: 14.06.2001
(51) Int. Cl.: H04N 3/15

(54) **Capteur photosensible matriciel**

(30) Priorité: 16.06.2000 FR 0007677
(71) Demandeur: CSEM Centre Suisse d'Electronique et de Microtechnique SA, 2007 Neuchâtel (CH)
(72) Inventeur: Lauxtermann, Stefan, 8965 Berikon (CH)
(74) Mandataire: Caron, Gérard

(57) **Abrégé**

Ce capteur photosensible intégré comprend des pixels actifs (1) dont chacun comprend un élément photosensible (2), un élément amplificateur (4) et un élément de rétablissement à l'état initial (3). Le réseau matriciel comprend des moyens d'adressage, des moyens d'alimentation et des moyens de rétablissement à l'état initial que des moyens de lecture de l'information de luminance captée par les pixel, pour extraire l'information du réseau.

Les moyens d'adressage, d'alimentation, de rétablissement et de lecture sont implémentés à l'aide d'une même pluralité de lignes de colonne et de rangée (5, 6, 7) du réseau matriciel. Des moyens de commande logique (12, 16, 17) sont connectés aux lignes de colonne et de rangée pour leur assigner sélectivement les fonctions d'alimentation, d'adressage, de rétablissement à l'état initial et de lecture.

## Description

La présente invention est relative à un capteur photosensible intégré à pixels actifs du type comprenant un réseau de pixels, chaque pixel comprenant un élément photosensible, un élément amplificateur et un élément de rétablissement à l'état initial, le réseau matriciel comprenant en outre, pour la commande des pixels, des moyens d'adressage, des moyens d'alimentation, des moyens de rétablissement à l'état initial et des moyens de lecture de l'information de luminance captée par les pixels, pour extraire cette information de luminance du réseau matriciel.

On sait que dans ce genre de capteurs photosensibles, une partie seulement de la surface totale de la puce sur laquelle il est réalisé, est sensible à la lumière, le reste de la surface étant occupé par les composants et les conducteurs qui permettent d'en assurer le fonctionnement. C'est pourquoi ce que l'on désigne communément par le "facteur de remplissage" de ces réseaux est relativement faible.

Dans un exemple de capteur photosensible connu, chaque pixel comprend trois composants actifs, comme des transistors, réalisant respectivement les fonctions d'amplification, d'adressage et de remise à l'état initial (expression que l'on remplacera par le sigle REI dans ce qui va suivre). De plus, au niveau du réseau matriciel, on a besoin de quatre types de conducteurs qui doivent desservir les cellules pour leur apporter les fonctions d'alimentation, de sortie d'information, de commande de lecture et de commande de REI. Ainsi, lorsque le capteur photosensible est réalisé en technologie CMOS à 1µm, un pixel du réseau aura un facteur de remplissage de 40% seulement et une surface de 15x15 µm².

La proposition de Hisanori Ihara et al. faite au cours de la Conférence Internationale de l'IEEE sur les Circuits à l'Etat Solide de 1998, Session 11, document FA 11.8, porte sur un pixel pour réseau matriciel photosensible ne comprenant que deux transistors, l'un d'amplification et l'autre de REI, mais dans ce cas, le pixel comporte en outre une capacité d'adressage intégrée spécialement sur la puce à côté des composants actifs.

La présence d'une telle capacité d'adressage constitue un inconvénient qui, par rapport à l'art antérieur esquissé ci-dessus, vient encore pénaliser le facteur de remplissage, car cette capacité nécessite de la surface supplémentaire. En outre, la ligne de sélection de REI de ce montage doit être portée à des potentiels analogiques très voisins (typiquement 0,9 et 2,1 Volts) pendant les phases respectives d'intégration (acquisition du signal de luminance) et de lecture du pixel. La fixation de ces potentiels proches l'un de l'autre est difficile à réaliser d'autant qu'elle doit se faire en un temps très court.

L'invention a pour but de fournir un capteur photosensible intégré du type défini ci-dessus qui soit dépourvu des inconvénients de l'art antérieur analysé.

Elle a donc pour objet un capteur photosensible intégré à pixels actifs du type défini en préambule, qui est caractérisé en ce que lesdits moyens d'adressage, d'alimentation, de rétablissement et de lecture sont implémentés à l'aide d'une même pluralité de lignes de colonne et de rangée du réseau matriciel et en ce qu'il est prévu en outre des moyens de commande logique extérieurs audit réseau matriciel et connectés auxdites lignes de colonne et de rangée pour permettre la commande sélective dans chaque pixel des fonctions d'alimentation, d'adressage, de rétablissement à l'état initial et de lecture.

Il résulte de ces caractéristiques que chaque pixel du réseau matriciel peut être implémenté à l'aide de deux éléments actifs seulement sans qu'il soit nécessaire d'utiliser une capacité spécialement intégrée. En outre, l'agencement préconisé par l'invention nécessite un nombre très réduit de lignes de connexion. Le facteur de remplissage de ce réseau matriciel peut donc être nettement plus grand que dans les réalisations de la technique antérieure.

D'autres caractéristiques et avantages de la présente invention apparaîtront au cours de la description qui va suivre, donnée uniquement à titre d'exemple et faite en se référant aux dessins annexés sur lesquels:
- la figure 1 est un schéma d'un exemple de réalisation d'un pixel du capteur photosensible selon l'invention;
- les figures 2 à 4 sont des schémas de ce même pixel illustrant chacun l'une des trois phases de son fonctionnement;
- la figure 5 est un chronogramme de ces trois phases de fonctionnement; et
- la figure 6 est un schéma d'un exemple de réalisation du capteur photosensible selon l'invention.

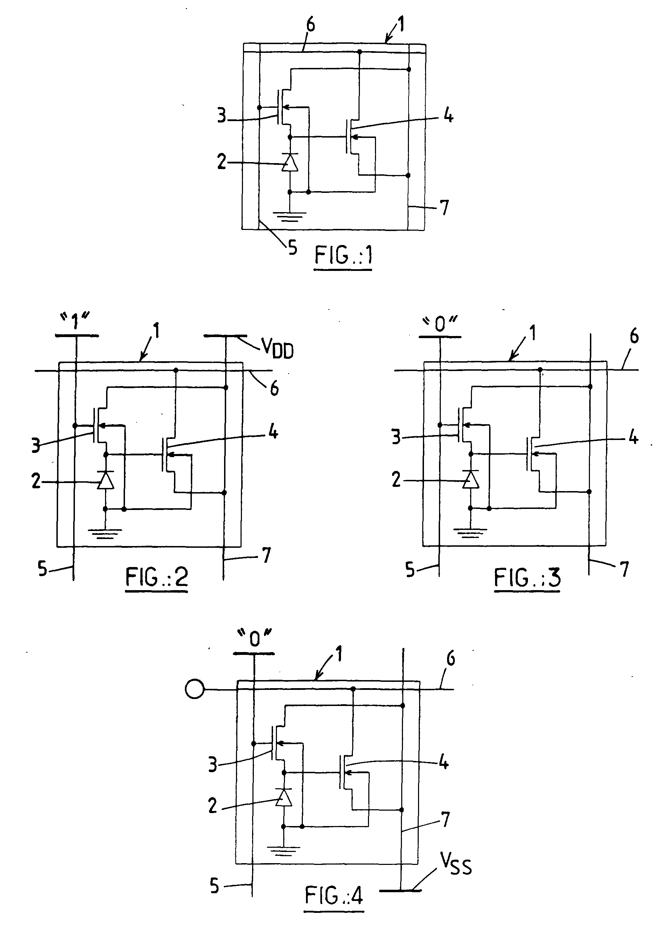

Sur la figure 1, on a représenté le mode de réalisation préféré d'un pixel actif 1 faisant partie d'un réseau matriciel de pixels identiques qui forment un capteur photosensible selon l'invention.

Ce pixel 1 comprend un composant photosensible 2 tel qu'une diode, connectée par son anode à la masse. Sa cathode est reliée d'une part à la source d'un transistor 3 de REI et d'autre part à la grille d'un transistor d'amplification 4.

La grille du transistor 3 est raccordée à une ligne de REI 5 qui passe de pixel en pixel selon la colonne correspondante du réseau matriciel dans laquelle est inséré le pixel considéré.

Le drain du transistor 4 est relié à une ligne 6 dite "à haute impédance" qui s'étend de pixel en pixel selon une rangée du réseau matriciel.

La source du transistor 4 est reliée à une ligne 7 dite "à basse impédance" qui est également orientée selon une colonne du réseau matriciel. Le drain du transistor 3 est également connecté à cette même ligne à basse impédance 7.

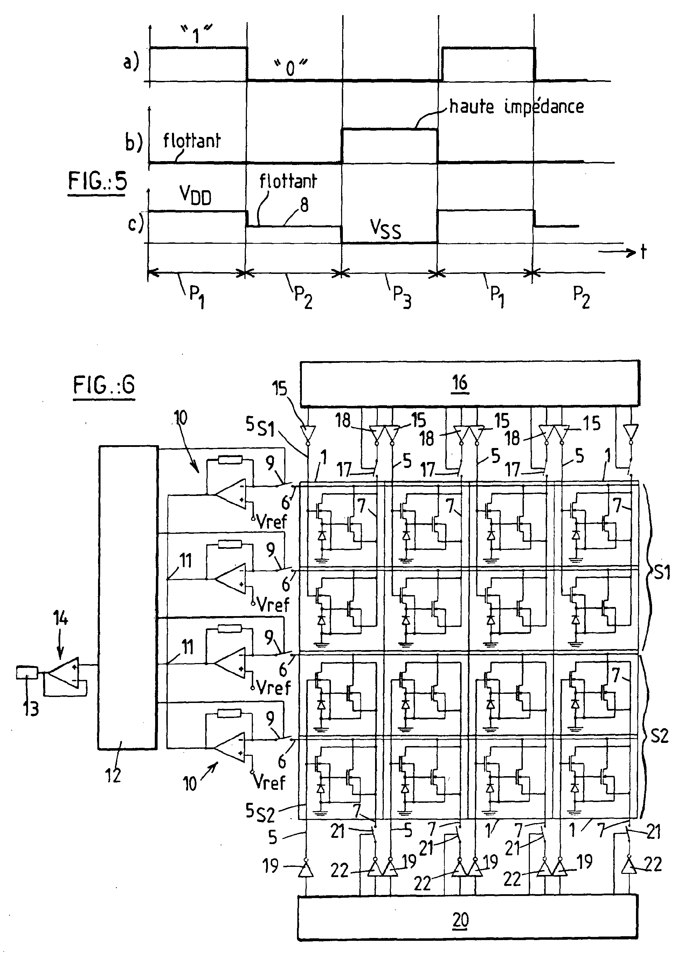

Les figures 2, 3 et 4 montrent trois configurations de fonctionnement du pixel qui vient d'être décrit, ces configurations correspondant respectivement à une phase de REI, à une phase d'intégration ou d'acquisition de l'information de luminance, et à une phase de lecture. La figure 5 est un diagramme des temps illustrant en fonction du temps t, respectivement en a), b) et c), les états des lignes 5, 6 et 7 pendant ces trois phases identifiées sur cette figure par P1, P2 et P3. Ces diagrammes n'indiquent pas les valeurs des potentiels de ces lignes mais simplement qualitativement des états actifs de celles-ci.

Pendant la phase de REI (figure 2 et P1 sur la figure 5), la ligne 7 à faible impédance est connectée à un potentiel d'une première polarité, tel que le potentiel d'alimentation V_{DD}, tandis que la ligne à haute impédance 6 est maintenue flottante. La ligne 5 de REI est portée à un premier niveau logique par exemple le niveau logique "1". La capacité parasite de la diode 2 est alors déchargée vers le potentiel V_{DD} par l'intermédiaire du transistor de REI 3.

Pendant la phase d'intégration (figure 3 et P2 sur la figure 5), la ligne de REI 5 est portée au niveau logique opposé, par exemple le niveau logique "0" de sorte que la capacité parasite de la diode 2 se charge en fonction de l'intensité de la lumière frappant le pixel concerné. Pendant cette phase, les lignes de basse et de haute impédance 6 et 7 sont maintenues flottantes. Le processus d'intégration de charges est symbolisé par le trait 8 sur la figure 5.

Pendant la phase de lecture (figure 4 et P3 sur la figure 5), la ligne de REI reste au deuxième niveau logique, la ligne 6 transporte un courant correspondant à l'information de luminance détectée et la ligne 7 est connectée par l'une de ses extrémités (l'extrémité du bas sur la figure) au potentiel de polarité opposée que précédemment tel que le potentiel d'alimentation V_{SS}, tandis que l'autre extrémité est maintenue flottante.

La figure 6 représente un exemple de réseau matriciel pouvant être formé de pixels tels qu'ils viennent d'être décrits ci-dessus. Bien que, pour simplifier, l'on n'ait représenté que seize pixels, il est évident que le réseau peut en comporter bien davantage.

On remarquera que le réseau est subdivisé en deux sections S1 et S2 qui, en l'occurrence, occupent respectivement la moitié haute (comme vu sur la figure 6) et la moitié basse du réseau. Chaque ligne de haute impédance 6 peut être connectée par un interrupteur 9 à un amplificateur 10 de "transimpédance" dont la sortie est connectée à un noeud 11. Ce dernier est relié à une logique 12 de commande de rangée. Les interrupteurs 9 sont commandés par cette logique. La sortie du réseau est fournie sur une borne 13 par l'intermédiaire d'un amplificateur de tension 14.

Les lignes de REI 5 de la section S1 sont connectées par l'intermédiaire d'inverseurs 15 à une logique de commande 16 desservant la section S1. Les lignes à basse impédance 7 de cette même section sont reliées à un interrupteur 17 relié à son tour à la logique de commande 16 et permettant de brancher à ces lignes 7 un inverseur 18.

Un montage semblable de commande des lignes de colonne 5 et 7, est prévu pour la section inférieure S2 du réseau. Il comporte les inverseurs 19, la logique de commande 20, des interrupteurs 21 et des inverseurs 22.

Les logiques de commande 12, 16 et 20 sont agencées pour permettre la commande des pixels à l'aide des lignes 5, 6 et 7 en assignant à ces dernières des fonctions de connexion ou d'état flottant de telle manière que tous les pixels 1 puissent tour à tour assumer les trois configurations qui viennent d'être décrites ci-dessus à propos des figures 2 à 4.

Les spécialistes sauront concevoir sans difficultés les logiques de commande 12, 16 et 20 pour que cette commande puisse être mise en oeuvre.

Les logiques de commande 12, 16 et 20 sont ainsi capables, dans chaque section S1 et S2, de placer les pixels 1 en configuration de lecture (figure 4) de façon séquentielle par colonne. Pendant qu'une colonne de pixels 1 est en lecture, les lignes à haute impédance 6 sont séquentiellement explorées par rangée par la fermeture des interrupteurs 9 commandés en séquence par la logique de commande 12. Ainsi, il est possible de mesurer les signaux de luminance pixel par pixel dans les deux sections S1 et S2 du réseau. Comme pendant cette mesure, la sortie à basse impédance (ligne 7) d'un pixel 1 est portée au potentiel V_{SS}, on élimine l'effet de "grille inverse" (backgating) qui risque de réduire la transconductance du transistor d'amplification 4 du pixel, étant donné que, par ailleurs, la source et le caisson de ce transistor sont tous deux portés au potentiel V_{SS} (la masse, par exemple.). Cependant, les lignes 7 de toutes les autres colonnes demeurent alors flottantes afin d'éviter que les pixels de ces colonnes puissent contribuer à former le courant du pixel 1 qui est en configuration de lecture à l'instant considéré.

Pendant la phase de REI, la lecture des pixels doit être interrompue, car chaque ligne à basse impédance 7 a deux fonctions: d'une part, elle doit appliquer le potentiel V_{DD} au pixel pour y permettre la décharge de la capacité parasite de la diode 2; d'autre part, elle doit fournir la connexion au potentiel V_{SS} pour que la lecture du pixel puisse être effectuée.

Comme ces deux fonctions de la ligne 7 ne peuvent être assurées simultanément, une caractéristique avantageuse de l'invention prévoit de subdiviser le réseau matriciel en deux sections S1 et S2, afin que simultanément, l'une des sections puisse être en phase de REI, tandis que l'autre section est en phase de lecture.

Bien entendu, le réseau qui vient d'être décrit peut être réalisé, mutatis mutandis, avec des composants du type de conductivité opposé à celui des composants représentés aux figures.

## Revendications

1. Capteur photosensible intégré à pixels actifs (1) du type comprenant un réseau matriciel de pixels, chaque pixel comprenant un élément photosensible (2), un élément amplificateur (4) et un élément de rétablissement à l'état initial (3), le réseau matriciel comprenant en outre pour la commande des pixels (1), des moyens d'adressage, des moyens d'alimentation et des moyens de rétablissement à l'état initial ainsi que des moyens de lecture de l'information de luminance captée par les pixels (5, 6, 7, 12, 16, 20), pour extraire ladite information dudit réseau matriciel,
**caractérisé en ce que** lesdits moyens d'adressage, d'alimentation, de rétablissement et de lecture sont implémentés à l'aide d'une même pluralité de lignes de colonne (5, 7) et de rangée (6) du réseau matriciel et **en ce qu'**il est prévu en outre des moyens de commande logique (12, 16, 20) extérieurs audit réseau matriciel et connectés auxdites lignes de colonne (5, 7) et de rangée (6) pour permettre la commande sélective dans chaque pixel (1), des fonctions d'alimentation, d'adressage, de rétablissement à l'état initial et de lecture.

2. Capteur suivant la revendication 1, **caractérisé en ce que** lesdits moyens de commande logique (12, 16, 20) sont agencés pour établir pour lesdites lignes de colonne (5, 7) et de rangée (6), une séquence de connexion répétitive comprenant pour chaque pixel adressé (1) dudit réseau matriciel, une phase (P1) de remise à l'état initial, une phase (P2) d'acquisition d'une information de luminance et une phase de lecture (P3) de cette information.

3. Capteur suivant la revendication 2, **caractérisé en ce que** chacun desdits pixels (1) est connecté à une ligne de rangée (6) et des première et deuxième lignes de colonne (5, 7).

4. Capteur suivant la revendication 3, **caractérisé en ce que** lesdits moyens de commande logique (12,16,20) sont agencés pour, dans chaque pixel (1) et selon une séquence prédéterminée:
- dans ladite phase de remise en l'état initial (P1) connecter la première (5) desdites lignes de colonne à un premier niveau logique ("1") pour activer ledit élément de rétablissement à l'état initial (3) et connecter la deuxième (7) desdites lignes de colonne à un potentiel d'alimentation d'une première polarité (V_{DD}) pour décharger ledit élément photosensible, pendant que ladite ligne de rangée (6) est maintenue flottante;
- dans ladite phase d'acquisition (P2) connecter ladite première ligne de colonne (5) à un deuxième niveau logique ("0") opposé au premier niveau logique pour désactiver ledit élément de rétablissement à l'état initial (3), pendant que ladite seconde ligne de colonne (7) et ladite ligne de rangée (6) sont maintenues flottantes; et
- dans ladite phase de lecture (P3) maintenir ladite première ligne de colonne (5) audit deuxième niveau logique ("0"), et connecter ladite deuxième ligne de colonne (7) à un potentiel d'alimentation d'une deuxième polarité (V_{SS}) opposée à ladite première polarité et connecter ladite ligne de rangée (6) à des moyens de sortie de signal utile (10 à 14) dudit réseau matriciel.

5. Capteur suivant la revendication 4, **caractérisé en ce que** dans chacun desdits pixels (1), ledit élément de rétablissement à l'état initial (3) comprend un transistor dont la grille est reliée à ladite première ligne de colonne (5) et dont le trajet drain-source est connecté en série avec ledit élément photosensible (2) entre ladite seconde ligne de colonne (7) et le potentiel d'alimentation (V_{SS}) ayant ladite deuxième polarité.

6. Capteur suivant l'une quelconque des revendications 4 et 5, **caractérisé en ce que** dans chacune desdits pixels (1), ledit élément d'amplification comprend un transistor (4) dont la grille est reliée audit élément photosensible (2) et audit élément de rétablissement à l'état initial (3) et dont le trajet drain-source est raccordé entre ladite deuxième ligne de colonne (7) et ladite ligne de rangée (6).

7. Capteur suivant l'une quelconque des revendications 2 à 6, **caractérisé en ce que** ledit réseau matriciel est subdivisé en deux sections (S1, S2) et **en ce que** lesdits moyens de commande logique (12, 16, 20) sont agencés pour, par l'intermédiaire desdites lignes de colonne et de rangée (5, 6, 7), placer les pixels (1) de l'une desdites sections (S1) dans la phase de rétablissement à l'état initial (P1) pendant que l'autre section (S2) est dans la phase de lecture (P3), et inversement.
